# FASCICULE DE BREVET EUROPEEN

(11) **EP 2 938 209 B1**
(45) Date de publication et mention de la délivrance du brevet: **31.10.2018**
(21) Numéro de dépôt: 13814985.1
(22) Date de dépôt: 26.12.2013
(51) Int. Cl.: A23L 2/385, A23L 3/3454, A23P 10/40, A23L 19/00, A23L 5/43, A23L 33/15, A23L 33/16, A23L 5/00, A23L 33/105

(54) **STABILISATION DES COLORANTS NATURELS PAR UNE POUDRE D'ACÉROLA**
STABILISIERUNG VON NATÜRLICHEN FARBSTOFFEN DURCH EIN ACEROLAPULVER
STABILISATION OF NATURAL DYES BY AN ACEROLA POWDER

(30) Priorité: 26.12.2012 FR 1262799
(43) Date de publication de la demande: 04.11.2015
(73) Titulaire: Diana Food, 35560 Antrain (FR)
(72) Inventeur: RENAULT, Emilie, F-35650 Le Rheu (FR); LAROQUE, Delphine, F-35700 Rennes (FR)
(74) Mandataire: Regimbeau
(86) Numéro de dépôt international: PCT/EP2013/078022
(87) Numéro de publication internationale: WO 2014/102304

(56) Documents cités:
- JP-A- S60 234 554
- US-A- 3 086 915
- HUANG A S AND VON ELBE J H: "Effect of pH on the degradation and regeneration of betanine", JOURNAL OF FOOD SCIENCE, vol. 52, no. 6, 1987, pages 1689-1693, XP002712078,
- TATIANA MEZADRI ET AL: "Carotenoid pigments in acerola fruits (Malpighia emarginata DC.) and derived products", EUROPEAN FOOD RESEARCH AND TECHNOLOGY ; ZEITSCHRIFT FÜR LEBENSMITTELUNTERSUCHUNG UND -FORSCHUNG A, SPRINGER, BERLIN, DE, vol. 220, no. 1, 2005, pages 63-69, XP019328002, ISSN: 1438-2385, DOI: 10.1007/S00217-004-1042-Y

## Description

L'acérola (*Malpighia punicifolia L.,* synonyme de *Malpighia glabra L.,* ou encore *Malpighia emarginata DC*.) est un arbre dont le fruit est appelé cerise des Barbades ou cerise des Antilles car ressemblant beaucoup à la cerise.

Arbuste (ou arbrisseau) à feuillage persistant de la famille des Malpighiaceae, l'acérola pousse spontanément dans les régions tropicales d'Amérique du Sud, notamment au Pérou et dans les forêts amazoniennes du Brésil et du Venezuela. Il est aussi présent aux Antilles où il est appelé cerisier-pays.

Le fruit de l'acérola contient 20 à 30 fois plus de vitamine C que l'orange. Ceci en fait un des fruits les plus riches en vitamine C (1 000 mg à 2 000 mg/100 g), après le fruit du *Terminalia ferdinandiana* (50 fois plus riche que l'orange) et celui du Camu-Camu (*Myrciaria dubia*) (30 à 40 fois plus riche que l'orange). Il est également riche en vitamine B6, en vitamine B1 et en vitamine A ainsi qu'en flavonoïdes et en minéraux (fer, calcium, phosphore, potassium et magnésium).

La tendance pour le « naturel » est bien installée sur le marché des produits alimentaires, nutraceutiques et cosmétiques. La naturalité représente une des clés de succès des lancements commerciaux des produits apparus sur le marché ces dernières années, et ce d'autant plus dans un contexte où le consommateur perçoit désormais bien les risques encourus suite à l'ingestion de composés synthétiques et où les lois gouvernant le cadre d'utilisation des additifs alimentaires se durcissent, comme en témoigne par exemple le projet de révision de la liste des additifs autorisés mentionnés dans le règlement CE n° 1333/2008 du Parlement européen et du Conseil. Le caractère « Clean label » des biens de consommation est un élément décisif dans l'acte d'achat, et formuler des produits exempts de toute substance non connue de la ménagère est un lourd défi que les industriels des secteurs précédemment cités cherchent à relever.

Les efforts de développement de produits dits « naturels » apparaissent à tout niveau, et concernent tant la conception de produits finis que le secteur des ingrédients. Plus particulièrement, un besoin vis-à-vis du développement de colorants naturels, qu'ils soient additifs ou ingrédients, est clairement exprimé par les experts de la formulation. Cependant, il est à ce jour admis que les alternatives naturelles aux colorants synthétiques sont moins stables à la chaleur, à la lumière et aux changements de pH que subissent les produits alimentaires. Les concentrés de betterave rouge, vecteur des pigments bétanine sont les colorants rouges naturels par excellence adaptés aux applications dont le pH est proche de la neutralité. Cependant, leur stabilité est remise en cause lorsqu'ils sont soumis à des étapes de chauffage. Cette stabilisation est possible par l'utilisation de chélateurs tels que l'EDTA ou d'antioxydants mais cette solution ne satisfait pas la demande actuelle pour des produits naturels et « clean label ».

Le document D1 (A.S. HUANG & J. H. VON ELBE) est une étude de stabilité de la bétanine. D1 divulgue plus précisément que la thermostabilité de la bétanine en solution dépend du pH et de la présence d'oxygène. La stabilité optimale de la bétanine serait obtenue à pH compris entre 4.0 et 5.0. L'absence d'oxygène augmenterait également la stabilité de la bétanine (page 1693, conclusion).

Le document D2 (JP60234554) divulgue une méthode pour stabiliser la chlorophylle et éviter la formation de phéophorbide A. Cette méthode consiste à ajouter une substance basique utilisable en production alimentaire. Cette substance peut être, plus particulièrement, un hydroxyde de calcium ou de l'eau contenant du carbonate de potassium et de sodium.

Il existe donc un besoin pour des composés « naturels » de stabilisation des pigments naturels comme la bétanine.

Les inventeurs ont maintenant découvert qu'une poudre de jus concentré d'acérola contenant de l'hydroxyde de magnésium peut stabiliser les pigments bétanine. Or, ce composé de stabilisation est d'origine naturelle. En outre, ce produit a pour avantages d'être sous forme d'une poudre facilement utilisable en formulation agro-alimentaire et de limiter l'acidification du produit.

Par conséquent, un premier objet de l'invention concerne une poudre constituée de 0,5 à 8 % en poids d'eau et d'une matière sèche constituée de 88 à 95 % en poids d'un extrait sec de fruit d'acérola et de 5 à 12 % en poids d'hydroxyde ou de carbonate de magnésium, calcium, ou zinc.

De préférence, la matière sèche de la poudre de l'invention est constituée de 90 à 94 % en poids d'un extrait sec de fruit d'acérola et de 6 à 10 % en poids d'hydroxyde ou de carbonate de magnésium, calcium, ou zinc, de préférence d'hydroxyde de magnésium.

On entend par « extrait sec de fruit d'acérola » la matière sèche d'un produit issu du séchage d'un jus de fruit d'acérola, de préférence un jus concentré c'est-à-dire à 10 à 70° Brix, de préférence à 45 à 55° Brix. De préférence, ledit jus concentré présente une teneur en vitamine C de 3 à 24 %, de préférence de 15 à 21 %. De préférence, ledit jus concentré présente une acidité de 800 à 2200 meq/kg, de préférence de 1200 à 1800 meq/kg. De préférence, ledit jus concentré présente un pH de 2,5 à 4, de préférence de 3 à 3,6.

La poudre de l'invention est caractérisée par sa forte teneur en vitamine C.

De préférence, elle est de 30 à 40 % en poids de vitamine C par rapport au poids total de la poudre, de manière particulièrement préférée de 30 à 36 %, en particulier 34 % +/-3 %, de préférence elle est de 34 % +/-2 % (l'analyse de la vitamine C est réalisée par HPLC en phase inverse sur une colonne Sphérisorb ODS2 ou équivalente, la procédure d'analyse étant décrite par la norme européenne NF EN 14130).

La forte teneur en vitamine C de la poudre selon l'invention a une importance clé dans le domaine nutraceutique, puisqu'elle permet d'administrer la dose journalière recommandée dans une forme galénique de taille adéquate. En outre, dans le domaine de l'alimentaire (notamment en charcuterie), la poudre de l'invention, du fait de sa forte teneur en vitamine C, peut être utilisée à une dose suffisamment réduite pour limiter les effets secondaires négatifs liés à l'incorporation de fortes proportions d'acérola (tels que le goût et l'acidité de l'acérola), tout en apportant une dose de vitamine C satisfaisante dans un espace réduit (intérêt dans le cas où la poudre doit être utilisée dans une composition de différents constituants limitée en place).

La poudre de l'invention présente des caractéristiques de pH sur une plage de 4 à 8. De préférence, la poudre de l'invention présente un pH de l'ordre de 4,5 à 6 (pH mesuré sur une solution à 10 % dans l'eau). La borne minimale de 4,5 correspond au pH en dessous duquel il est conseillé de ne pas descendre pour garantir une quantité suffisante de la forme basique du couple acide ascorbique/ascorbate et faciliter le séchage, même si à pH 4 à 4,5 la faisabilité du séchage est encore possible. La borne maximale de 6 correspond à un pH au-dessus duquel un faux goût de type « savon » non souhaitable peut se développer. Des pH de 6 à 8 peuvent cependant être utilisés si l'application finale permet de ne pas révéler les défauts organoleptiques pouvant être développés.

De préférence, la poudre de l'invention comprend moins de 5 % en poids d'eau, de préférence de 1 à 3 %.

Un autre objet de l'invention concerne un procédé de préparation de la poudre selon l'invention comprenant les étapes suivantes :
(i) mélange de jus de fruit d'acérola, d'hydroxyde ou de carbonate de magnésium, calcium, ou zinc et d'eau,
(ii) séchage jusqu'à une teneur en eau de moins de 8 % en poids, et
(iii) tamisage.

La poudre de l'invention est obtenue par mélange de jus de fruit d'acérola, de préférence concentré, d'hydroxyde ou de carbonate de magnésium, calcium, ou zinc et d'eau dans des proportions choisies afin de permettre un séchage efficace tout en maximisant la teneur en vitamine C.

L'extrait sec de fruit d'acérola est ainsi présent dans la poudre de l'invention à raison de 88 à 95 % en poids du poids sec du mélange.

L'hydroxyde ou le carbonate de magnésium, calcium, ou zinc est présent dans le mélange jus de fruit d'acérola/hydroxyde ou carbonate/eau à raison de 5 à 12 % en poids du poids sec du mélange.

Cette quantité peut également être définie en fonction du pH. Elle permet d'atteindre un pH du mélange jus de fruit d'acérola/hydroxyde ou carbonate/eau avant séchage de préférence entre 4,5 et 5.

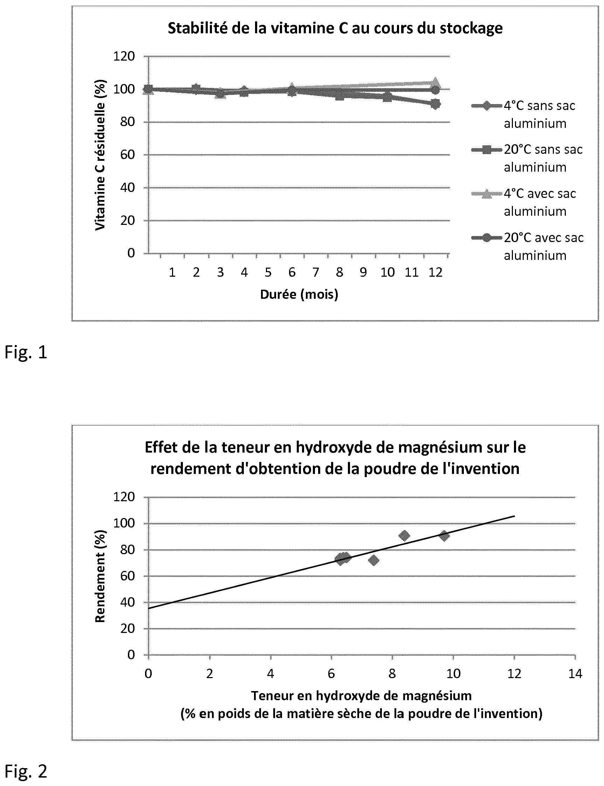

Comme le montre la Figure 2, des taux d'hydroxyde ou de carbonate de magnésium, calcium, ou zinc inférieurs à 5 % entrainent une perte d'efficacité de séchage et de rendement. De même, des taux d'hydroxyde ou de carbonate de magnésium, calcium, ou zinc supérieurs à 12 % entrainent l'apparition d'un goût de « savon » inapproprié pour une utilisation en agroalimentaire, ainsi qu'une diminution de la teneur en vitamine C du fait de la diminution de la proportion de l'extrait sec de fruit d'acérola.

La quantité d'eau du mélange jus de fruit d'acérola/hydroxyde ou carbonate/eau est ajustée de sorte à obtenir un mélange à 20 à 35° Brix, de préférence à 30° Brix.

Ce mélange est ensuite séché, de préférence par atomisation ou séchage sous vide ou tout autre moyen permettant de garantir l'obtention d'un produit entièrement soluble. Certains procédés classiquement utilisés dans le cadre de la fabrication de produits secs, tels que la lyophilisation par exemple, sont susceptibles de donner lieu à des poudres à l'aspect granuleux ou hétérogène associées à la génération de troubles ou d'insolubles après dissolution. Ceci est démontré dans l'exemple 1. L'obtention d'une poudre particulièrement soluble permet une meilleure libération de la vitamine C et des autres constituants actifs du fruit d'acérola et donc une meilleure efficacité en application, ce qui élargira le spectre d'applications de la poudre à de nombreux aliments ou compositions alimentaires. Au contraire, l'obtention d'une poudre ayant une solubilité moindre a des conséquences sur les possibilités d'application de cette poudre, qui ne pourra pas être incorporée dans certains produits de manière homogène ou sans en modifier la texture.

La poudre obtenue est ensuite tamisée, conditionnée et stockée.

Un jus concentré de fruit d'acérola (*Malpighia punicifolia L.* ou *Malpighia glabra L.* ou *Malpighia emarginata DC*.) est habituellement utilisé comme matière première pour concevoir la poudre de l'invention. Cependant, le procédé mis en oeuvre pour l'obtention de la poudre de l'invention peut aussi inclure l'étape de fabrication du jus concentré de fruit d'acérola, par broyage et pressage des fruits d'acérola puis concentration du jus ainsi extrait selon des méthodes classiques d'obtention de jus concentrés végétaux, pouvant notamment inclure des étapes telles que la cuisson, la pasteurisation, la décantation, la centrifugation, la filtration et l'ultrafiltration, l'enzymage, la fermentation etc. Ces étapes, en particulier les étapes d'enzymage et de fermentation, peuvent permettre d'améliorer les propriétés de la poudre selon l'invention telles que le profil sensoriel ou la teneur en vitamine C. Dans un mode de réalisation optimal du procédé, la matière première utilisée est un jus concentré clarifié de fruit d'acérola à environ 45 à 55° Brix, de préférence à 50° Brix qui présente une teneur en vitamine C de 17 % environ (15 à 21 % plus largement), une acidité de 1200 à 1800 meq/kg et un pH de 3,5 environ (3 à 3,6 plus largement).

Le jus de fruit d'acérola éventuellement concentré est stocké sous forme congelée de sorte à limiter la perte en vitamine C.

Un autre objet de l'invention concerne un additif ou un ingrédient alimentaire comprenant une poudre selon l'invention.

De préférence, l'additif ou l'ingrédient alimentaire de l'invention comprend en outre un colorant naturel comprenant un ou plusieurs pigments naturels, notamment la bétanine.

De préférence, l'additif ou l'ingrédient alimentaire de l'invention comprend en tant que colorant naturel un jus concentré ou une poudre de betterave rouge.

La poudre de l'invention permet de stabiliser les colorants naturels comme la bétanine.

De préférence, la poudre de l'invention permet de stabiliser des colorants obtenus à partir de betterave rouge.

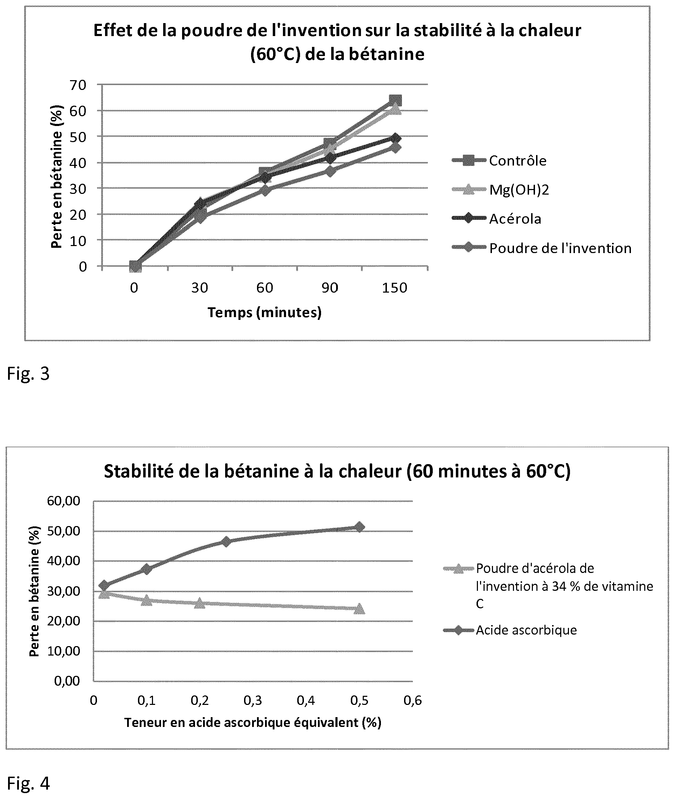

Les inventeurs ont découvert de manière surprenante qu'un extrait d'acérola seul permet de stabiliser les colorants obtenus à partir de betterave rouge, notamment la bétanine. De manière encore plus surprenante, les inventeurs ont découvert que la poudre de l'invention permet une meilleure stabilisation des colorants obtenus à partir de betterave rouge, notamment la bétanine, qu'un extrait d'acérola seul. La Figure 3 démontre bien que la combinaison extrait d'acérola/hydroxyde de magnésium, correspondant à la poudre de l'invention, permet une meilleure stabilisation de la bétanine que l'extrait d'acérola seul, et que l'hydroxyde de magnésium a un effet négligeable sur la stabilisation de la bétanine. La poudre selon l'invention présente donc un effet particulier sur la stabilisation de la bétanine, qui ne résulte pas d'un simple effet additionnel de l'effet positif de l'extrait d'acérola seul et de l'effet négligeable de l'hydroxyde de magnésium.

Les inventeurs ont également découvert que la poudre selon l'invention ne se réduit pas à sa teneur en acide ascorbique, pourtant en forte proportion dans la poudre de l'invention. En effet, elle présente un effet dose positif qui permet d'obtenir une plus grande efficacité de stabilisation du pigment bétanine. La Figure 4 démontre que l'effet sur la stabilisation de la bétanine est d'autant plus important que la concentration en poudre de l'invention est élevée, alors qu'il diminue avec des doses croissantes d'acide ascorbique.

Les colorants naturels stabilisés par la poudre de l'invention sont utilisés pour colorer les viandes notamment les produits carnés transformés traités thermiquement (saucisses de type knack...), les boissons à base de lait (milkshakes...), les boissons instantanées, les boissons laitières acides, la confiserie (bonbons enrobés, bonbons durs, marshmallows...), les yaourts (incubés, brassés...), les gâteaux, les biscuits, les pièces de décoration, les nappages.
Un autre objet de l'invention concerne un aliment ou composition alimentaire comprenant un additif ou un ingrédient alimentaire selon l'invention. De préférence, cet aliment ou composition alimentaire est un produit carné transformé traité thermiquement (saucisse de type knack...), une boisson à base de lait (milkshakes...), une boisson instantanée, une boisson laitière acide, un produit de confiserie (bonbon enrobé, bonbon dur, marshmallow...), un yaourt (incubé, brassé...), un gâteau, un biscuit, une pièce de décoration, un nappage.

Un autre objet de l'invention concerne l'utilisation d'une poudre selon l'invention pour stabiliser un colorant naturel comprenant la bétanine.
Figure 1 : Evolution de la teneur en vitamine C de la poudre de l'invention au cours d'un stockage à 4°C ou à 20°C en sac aluminium ou sans sac aluminium.
Figure 2 : Démonstration de l'importance de la teneur en hydroxyde de magnésium sur le rendement d'obtention de la poudre de l'invention.
Figure 3 : Démonstration de l'effet de la poudre de l'invention, de l'extrait d'acérola seul (jus concentré d'acérola à 50° Brix dilué à 0,06 %) et de l'hydroxyde de magnésium (poudre de Mg(OH)₂ diluée à 0,002 %) sur la thermostabilité de la bétanine (jus concentré de betterave dilué à 0,2 % dans l'eau).
Figure 4 : Démonstration de l'effet de dégradation ou de l'absence d'effet de dégradation de la bétanine en présence d'acide ascorbique ou de poudre de l'invention, respectivement.

### Exemples

### Exemple 1 - Production et propriétés de solubilisation d'une poudre selon l'invention

### i. Production d'une poudre selon l'invention

Compte tenu des caractéristiques du jus concentré de fruit d'acérola mis en oeuvre (50° Brix, 17 % de vitamine C), le pH du mélange a pu être stabilisé à 4,5 avec 92 % de jus concentré de fruit d'acérola et 8 % d'hydroxyde de magnésium (pourcentages exprimés sur matière sèche).

La quantité d'eau à ajouter a ensuite été calculée de sorte à obtenir un degré Brix du mélange jus concentré de fruit d'acérola/ hydroxyde de magnésium/eau de 30° Brix.

La formulation suivante a par conséquent été réalisée selon la méthode ci-dessous :

| **Matière première** | **Recette** (% sur matière sèche) | **pH** | **Quantité mise en oeuvre** (kg) |
|---|---|---|---|
| Jus concentré de fruit d'acérola | 92 | 3,01 | 420 |
| Hydroxyde de magnésium | 8 | 14 | 15 |
| Eau | - | 7,61 | 300 |

Les matières ont été mélangées en cuve et le mélange a été séché par atomisation (température d'entrée à 160°C, température de sortie à 86-88°C). La poudre a été tamisée à 650 µm et conditionnée en sacs aluminium.

Le rendement obtenu s'élève à 73,5 % et la productivité est de l'ordre de 84 kg/h.

La poudre se caractérise par une teneur en vitamine C de 36,7 % en poids du poids total de la poudre, stable au cours du temps comme démontré par le test de vieillissement initié sur la poudre (voir Figure 1).

Le produit présente une excellente solubilité (absence de culot visible à l'oeil nu après dissolution de la poudre à 10 % en poids du poids total de la poudre dans l'eau puis centrifugation à 10000 g pendant 10 minutes) et la solution obtenue est claire et limpide.

### ii. Effet de la teneur en hydroxyde de magnésium dans la poudre de l'invention

Afin d'illustrer l'importance de la teneur en hydroxyde de magnésium dans la poudre de l'invention, des essais de séchage par atomisation ont été effectués avec différents taux de Mg(OH)₂ (essais au stade pilote ici).

Comme le prouve le graphique de la Figure 2, le rendement d'obtention de la poudre de l'invention diminue avec la réduction des doses d'hydroxyde de magnésium, pour atteindre des valeurs inférieures à 65 % (rendement médiocre) à une teneur de 5 % en poids d'hydroxyde de magnésium (teneur exprimée sur la matière sèche de la poudre de l'invention).

### iii. Propriétés de solubilisation d'une poudre de l'invention

Afin de démontrer la solubilité moindre d'une poudre d'acérola lyophilisée, des tests de solubilisation de la poudre atomisée de l'invention, comparativement à une poudre lyophilisée, ont été effectués. Les résultats sont présentés ci-après dans le Tableau 1 :

**Tableau 1 : Tests de solubilisation de poudres d'acérola obtenues selon 2 procédés de séchage différents (atomisation pour la poudre de l'invention et lyophilisation)**

| **Echantillon (dilué à 10 % dans l'eau)** | **Matières insolubles (%)** |
|---|---|
| Poudre d'acérola de l'invention | 1,8 +/- 0,3 |
| Poudre d'acérola lyophilisée | 5,7 +/- 0,1 |

Ces tests démontrent bien la moindre solubilité de la poudre lyophilisée (quantification des matières insolubles enregistrées dans le Tableau 1). Environ trois fois plus de composés insolubles sont générés à partir d'une solution à 10 % de poudre lyophilisée. Par ailleurs, l'apparition d'un culot visible à l'oeil nu est constatée dans le cas du test réalisé avec la poudre lyophilisée, ce qui n'est pas le cas pour le test réalisé avec la poudre de l'invention.

Ce critère peut être un frein à l'utilisation du produit dans des produits clairs et limpides (exemple des boissons). Par ailleurs, il peut être supposé que dans une poudre lyophilisée caractérisée par de nombreuses particules insolubles après mise en solution, la vitamine C soit moins disponible et soit moins efficace pour les effets qui peuvent lui être attribués (rôle antioxydant, stabilisant...). Le spectre d'utilisation de la poudre de l'invention (obtenue par atomisation) n'est en revanche pas soumis à cette contrainte.

### Exemple 2 - Potentiel antioxydant de la poudre de l'Exemple 1 versus acide ascorbique

Des tests réalisés *in vitro* permettent d'illustrer les propriétés de la poudre de l'invention par rapport au simple effet de l'acide ascorbique. Le tableau ci-dessous démontre que la poudre de l'Exemple 1, par comparaison à l'acide ascorbique, exerce une activité antiradicalaire et antioxydante supérieure à celle exercée par des concentrations équivalentes en acide ascorbique.

**Tableau 2 : Evaluation du pouvoir antioxydant de la poudre d'acérola versus acide ascorbique**

| **Méthode** | **Poudre de l'invention** | **Acide ascorbique** |
|---|---|---|
| Activité antiradicalaire (% de piégeage du radical libre DPPH à la concentration fixe de 0,44 mg/mL éq acide ascorbique) | 90,1 | 70,6* |
| Pouvoir antioxydant global (g/100 g de produit eq. acide ascorbique) | 58 | 34 |

| | | |
|---|---|---|
| *acide ascorbique testé de façon combinée à Mg(OH)₂ dans les proportions présentes dans la poudre de l'invention. | | |

### Exemple 3 - Effet de la poudre de l'invention sur la stabilisation des pigments rouges de betterave

### i. Preuve de stabilisation de la betterave en modèle charcuterie

La poudre de l'Exemple 1 a été testée en modèle alimentaire comme agent stabilisant des pigments de betterave. Elle a été incorporée à un jus concentré de betterave rouge à hauteur de 40 %, 10 % et 4 % (40 g, 10 g et 4 g de poudre de l'Exemple 1, respectivement, ajoutés à 100 g de concentré de betterave à environ 70° Brix et à environ 0,6 à 0,7 % de bétanine et ayant un pH de 4,44), ces mélanges (dont le pH n'est pas modifié de manière significative suite à l'ajout de la poudre de l'invention compte tenu du pH et du dosage d'utilisation de la poudre de l'invention) ayant eux-mêmes été incorporés à une base d'émulsion utilisée pour la fabrication de saucisses à pâte fine. Après un chauffage de 20 minutes à 80°C, une mesure de la couleur par un système L*a*b* (spectrocolorimètre Minolta CM5, lumière D65, angle 10°, réflexion) a été effectuée.

Le tableau ci-dessous présente les résultats obtenus selon 6 conditions : un témoin négatif sans colorant, un test avec le concentré de betterave seul, 3 tests avec le concentré de betterave combiné à la poudre d'acérola de l'invention selon les différents dosages précédemment cités, et un témoin positif avec carmin.

**Tableau 3 : Analyses de la couleur obtenues en modèle alimentaire « charcuterie » après incorporation ou non de colorants, seuls ou stabilisés**

| **Ingrédient et dosage dans l'application saucisse** | **Mesures L*a*b* après chauffage** | | | **Photographies** | **Estimation RGB** | **ΔE Carmin** |
|---|---|---|---|---|---|---|
| | **L*** | **a*** | **b*** | | | |
| Sans colorant | 65,54 | 8,80 | 14,66 | 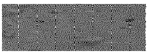 | (181; 152; 133) | 15,1 |
| Concentré de betterave 0,5 % | 52,48 | 23,78 | 15,29 | 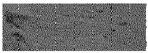 | (169; 108; 99) | 7,2 |
| Carmin 0,01 % | 57,32 | 20,85 | 10,83 | 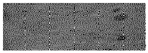 | (176; 124; 120) | 0 |
| Concentré de betterave 0,5 % + poudre de l'invention 0,2 % | 53,81 | 20,94 | 9,78 | 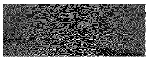 | (165; 114; 112) | 3,7 |
| Concentré de betterave 0,5 % + poudre de l'invention 0,05 % | 56,17 | 19,32 | 12,16 | Pas de photo effectuée | (173; 122; 114) | 2,3 |
| Concentré de betterave 0,5 % + poudre de l'invention 0,02 % | 54,46 | 19,55 | 10,23 | Pas de photo effectuée | (166; 117; 113) | 3,2 |

Le delta E est un indicateur permettant d'évaluer l'écart de couleur entre un échantillon et une référence. Il est calculé selon la formule suivante : ΔE = √[(a_{réf}* - a_{éch}*)²+(b_{réf}* - b_{éch} *)²+(L_{réf}* - L_{éch}*)²].

La référence choisie ici correspond à la condition avec carmin à 0,01 %. Une valeur de ΔE (nommée « delta E Carmin ») inférieure à 4 correspond à un produit dont l'écart de couleur par rapport à la référence est jugé acceptable.

Les essais réalisés permettent de mettre en valeur l'effet de la poudre de l'invention sur la stabilisation du concentré de betterave et notamment son potentiel à donner un produit de charcuterie dont la couleur se rapproche d'une cible avec carmin, stable à la chaleur.

### ii. Preuve de stabilisation de la betterave en modèle crème dessert

La poudre de l'Exemple 1 a également été testée pour son pouvoir de stabilisation à la chaleur des pigments rouges de betterave au sein d'une application de type crème dessert/entremet. La poudre d'acérola de l'invention a été incorporée à un jus concentré de betterave rouge à environ 70° Brix et à environ 0,6 à 0,7 % de bétanine à hauteur de 66 % (66 g de poudre d'acérola à 34 % de vitamine C, ajoutés à 100 g de jus concentré de betterave), ce mélange ayant lui-même été incorporé à une préparation à base d'eau, de lait, de crème, de sucre et d'agents de texture chauffée à 90°C pendant 10 minutes avant d'être refroidie. Une mesure d'absorbance à 540 nm a été effectuée au moyen d'un spectrocolorimètre afin de quantifier le taux de bétanine avant puis après chauffage, et le pourcentage de perte en bétanine a été calculé à partir de ces données selon la formule suivante : [(A₅₄₀ₙₘ avant chauffage - A₅₄₀ₙₘ après chauffage)/A₅₄₀ₙₘ avant chauffage]* 100.

Sur la base de mesures L*a*b* (spectrocolorimètre Minolta CM5, lumière D65, angle 10°, réflexion), un calcul de delta E a également été effectué, pour évaluer l'écart de couleur par rapport à une référence avant chauffage (nommée « delta E Chauffage »).

**Tableau 4 : Perte en bétanine et évolution de la couleur de jus concentré de betterave stabilisé ou non par le produit de l'invention mesurées en matrice alimentaire « crème dessert »**

| **Ingrédient et dosage d'incorporation dans la crème dessert** | **Pertes en bétanine après chauffage (%)** | **ΔE Chauffage** |
|---|---|---|
| Concentré de betterave 0,1 % | 29,3 | 18,5 |
| Concentré de betterave 0,06 % + poudre de l'invention 0,04 % | 11,6 | 11,3 |

Ces essais démontrent que le fait d'ajouter la poudre de l'invention au jus de betterave induit un effet de stabilisation des pigments de betterave, quel que soit l'indicateur considéré (chimique par le biais du pourcentage de perte en bétanine ou colorimétrique par le biais des valeurs de delta E Chauffage).

### iii. Effet de la poudre de l'invention, de l'extrait d'acérola seul et de l'hydroxyde de magnésium sur la thermostabilité de la bétanine

La Figure 3 démontre l'effet positif de l'extrait d'acérola seul (non associé à l'hydroxyde de magnésium) et de la poudre de l'Exemple 1, ainsi que l'effet négligeable de l'hydroxyde de magnésium, sur la thermostabilité de la bétanine.

Après 150 minutes de chauffage à 60°C dans un modèle aqueux :
- l'acérola apporté sous la forme d'un jus concentré à 50° Brix dilué à 0,06 % permet de réduire de 23 % la perte de bétanine observée dans un concentré de betterave dilué à 0,2 % dans l'eau.
- La poudre de l'invention permet de réduire de 28 % la perte de bétanine observée dans un concentré de betterave dilué à 0,2 % dans l'eau.
- L'hydroxyde de magnésium a une contribution négligeable car il permet une réduction inférieure à 5 % de la perte de bétanine observée dans un concentré de betterave dilué à 0,2 % dans l'eau.

Ce test démontre bien l'effet particulier de la poudre de l'invention, qui ne résulte pas d'un simple effet d'addition de l'effet de l'acérola seul et de l'effet négligeable de l'hydroxyde de magnésium (effet de la poudre de l'invention toujours supérieur à l'effet de l'acérola seul additionné de l'effet du Mg(OH)₂).

### iv. Absence d'effet négatif aux fortes concentrations

Le graphique de la Figure 4 démontre qu'en milieu aqueux (dilution de jus concentré de betterave à environ 70° Brix et à environ 0,6 à 0,7 % de bétanine et de poudre d'acérola à 34 % de vitamine C de l'Exemple 1 effectuée dans de l'eau, chauffage à 60°C pendant 60 minutes et refroidissement), les fortes concentrations en acide ascorbique induisent des niveaux de perte en bétanine plus importants qu'à faibles concentrations. A l'inverse, si la poudre de l'Exemple 1 est utilisée pour stabiliser la bétanine, l'effet stabilisant est d'autant plus important que la concentration en poudre d'acérola est élevée.

La poudre de l'invention permet donc d'éviter tout effet néfaste consécutif à un surdosage d'acide ascorbique.

## Revendications

1. Poudre constituée de 0,5 à 8 % en poids d'eau et d'une matière sèche constituée de 88 à 95 % en poids d'un extrait sec de fruit d'acérola et de 5 à 12 % en poids d'hydroxyde ou de carbonate de magnésium, calcium ou zinc.

2. Poudre selon la revendication 1, contenant une teneur en vitamine C d'origine naturelle de 30 à 40 % en poids par rapport au poids total de la poudre.

3. Poudre selon la revendication 2, contenant une teneur en vitamine C d'origine naturelle de 34 % ± 3 %, en particulier 34 % ± 2 %.

4. Poudre selon l'une quelconque des revendications précédentes, **caractérisée par** un pH variant de 4 à 8, préférentiellement de 4,5 à 6.

5. Poudre selon l'une quelconque des revendications précédentes, comprenant moins de 5 % en poids d'eau, préférentiellement de 1 à 3 %.

6. Procédé de préparation d'une poudre selon l'une quelconque des revendications précédentes, comprenant les étapes suivantes :
(i) mélange de jus de fruit d'acérola, d'hydroxyde ou de carbonate de magnésium, calcium ou zinc et d'eau,
(ii) séchage jusqu'à une teneur en eau de moins de 8 % en poids, et
(iii) tamisage.

7. Procédé selon la revendication 6 dans lequel le séchage est réalisé par atomisation.

8. Additif ou ingrédient alimentaire comprenant une poudre selon l'une quelconque des revendications 1 à 5.

9. Additif ou ingrédient alimentaire selon la revendication 8 comprenant en outre un colorant naturel comprenant un ou plusieurs pigments naturels, notamment la bétanine.

10. Additif ou ingrédient alimentaire selon la revendication 9 comprenant en tant que colorant naturel un jus concentré ou une poudre de betterave rouge.

11. Aliment ou composition alimentaire comprenant un additif ou un ingrédient alimentaire selon l'une quelconque des revendications 8 à 10.

12. Aliment ou composition alimentaire selon la revendication 11 **caractérisé en ce qu'**il s'agit d'un produit carné transformé traité thermiquement (saucisse de type knack...), d'une boisson à base de lait (milkshakes...), d'une boisson instantanée, d'une boisson laitière acide, d'un produit de confiserie (bonbon enrobé, bonbon dur, marshmallow...), d'un yaourt (incubé, brassé...), d'un gâteau, d'un biscuit, d'un marquant visuel, d'un nappage.

13. Utilisation d'une poudre selon l'une quelconque des revendications 1 à 5 pour stabiliser un colorant naturel comprenant la bétanine.

## Patentansprüche

1. Pulver bestehend aus 0,5 bis 8 Gew.-% Wasser und einer Trockenmasse bestehend aus 88 bis 95 Gew.-% eines Trockenextrakts aus Acerolafrüchten und 5 bis 12 Gew.-% Magnesium, Calcium oder Zink Hydroxid oder Carbonat.

2. Pulver nach Anspruch 1, das einen Vitamin-C-Gehalt natürlichen Ursprungs von 30 bis 40 Gew.-%, bezogen auf das Gesamtgewicht des Pulvers enthält.

3. Pulver nach Anspruch 2, das einen Vitamin-C-Gehalt natürlichen Ursprungs von 34 % ± 3 %, insbesondere 34 % ± 2 % enthält.

4. Pulver nach einem beliebigen der vorstehenden Ansprüche, **dadurch gekennzeichnet, dass** der pH-Wert zwischen 4 und 8, vorzugsweise zwischen 4,5 und 6 liegt.

5. Pulver nach einem beliebigen der vorstehenden Ansprüche, **dadurch gekennzeichnet, dass** es weniger als 5 Gew.-% Wasser, vorzugsweise 1 bis 3 %, enthält.

6. Verfahren zur Herstellung eines Pulvers nach einem beliebigen der vorstehenden Ansprüche, das die folgenden Schritte umfasst:
(i) Mischung aus Acerolafruchtsaft; Magnesium, Calcium oder Zinc Hydroxid oder carbonat und Wasser,
(ii) Trocknung bis auf einen Wassergehalt von weniger als 8 Gew.-% und
(iii) Sieben.

7. Verfahren nach Anspruch 6, wobei die Trocknung durch Sprühtrocknung.

8. Lebensmittelzusatzstoff oder -bestandteil, umfassend ein Pulver nach einem beliebigen der vorstehenden Ansprüche 1 bis 5.

9. Lebensmittelzusatzstoff oder -bestandteil nach Anspruch 8, ferner umfassend einen natürlichen Farbstoff, der ein oder mehrere natürliche Pigmente, insbesondere Betanin, umfasst.

10. Lebensmittelzusatzstoff oder -bestandteil nach Anspruch 9, umfassend als natürliche Färbung einen konzentrierten Saft oder ein Rote-Rüben-Pulver.

11. Lebensmittel oder Lebensmittelzusammensetzung, umfassend einen Zusatzstoff oder einen Lebensmittelbestandteil nach einem beliebigen der vorstehenden Ansprüche 8 bis 10.

12. Lebensmittel oder Lebensmittelzusammensetzung nach Anspruch 11, **dadurch gekennzeichnet, dass** es sich um ein verarbeitetes wärmebehandeltes Fleischprodukt (Typ Knackwurst...), ein Getränk auf Milchbasis (Milkshakes...) handelt, ein Instantgetränk, ein saures Milchgetränk, ein Süßwarenprodukt (verkleidete Bonbons, Marshmallows...), ein Joghurt (bebrütet, gerührt...), einen Kuchen, einen Keks, einen visuellen Marker, einen Belag handelt.

13. Verwendung eines Pulvers nach einem beliebigen der vorstehenden Ansprüche 1 bis 5 zur Stabilisierung eines natürlichen Farbstoffes mit Betanin.

## Claims

1. A powder consisting of 0.5% to 8% by weight of water and a dry material consisting of 88% to 95% by weight of an acerola fruit dry extract and 5% to 12% by weight of magnesium, calcium or zinc hydroxide or carbonate.

2. The powder according to claim 1, containing a natural vitamin C content of 30% to 40% by weight relative to the total weight of the powder.

3. The powder according to claim 2, containing a natural vitamin C content of 34% ± 3%, in particular 34% + 2%.

4. The powder according to any one of the preceding claims, **characterized by** a pH varying from 4 to 8, preferentially from 4.5 to 6.

5. The powder according to any one of the preceding claims, comprising less than 5% by weight of water, preferentially from 1% to 3%.

6. A method for preparing the powder according to any one of the preceding claims, comprising the following steps:
(i) mixing acerola fruit juice; magnesium, calcium or zinc hydroxide or carbonate; and water,
(ii) drying to a water content of less than 8% by weight, and
(iii) sieving.

7. The method according to claim 6 wherein drying is carried out by spray-drying.

8. A food additive or ingredient comprising the powder according to any one of claims 1 to 5.

9. The food additive or ingredient according to claim 8 further comprising a natural dye comprising one or more natural pigments, in particular betanin.

10. The food additive or ingredient according to claim 9 comprising as natural dye a red beet juice concentrate or a red beet powder.

11. A food or food composition comprising the food additive or ingredient according to any one of claims 8 to 10.

12. The food or food composition according to claim 11 **characterized in that** it is a heat-treated processed meat product (frankfurter-type sausage, etc.), a milk-based beverage (milkshake, etc.), an instant beverage, an acidic dairy beverage, a sweet (coated sweet, hard sweet, marshmallow, etc.), a yogurt (incubated, blended, etc.), a cake, a biscuit, a visual marker, or a topping.

13. Use of the powder according to any one of claims 1 to 5 to stabilise a natural dye comprising betanin.
